Europäisches Patentamt

European Patent Office

Office européen des brevets

(19)

(11) Veröffentlichungsnummer: **0 261 563**
**B1**

(12) **EUROPÄISCHE PATENTSCHRIFT**

(45) Veröffentlichungstag der Patentschrift: **23.01.91**

(51) Int. Cl.⁵: **G 21 C 17/06**

(21) Anmeldenummer: **87113508.3**

(22) Anmeldetag: **16.09.87**

(54) **Einrichtung zur Inspektion von Kernreaktor-Brennstäben.**

(30) Priorität: **20.09.86 DE 3632060**

(43) Veröffentlichungstag der Anmeldung:
**30.03.88 Patentblatt 88/13**

(45) Bekanntmachung des Hinweises auf die
Patenterteilung:
**23.01.91 Patentblatt 91/04**

(84) Benannte Vertragsstaaten:
**BE CH DE ES FR IT LI NL SE**

(56) Entgegenhaltungen:
**EP-A-0 163 935**
**EP-A-0 164 510**

(73) Patentinhaber: **ABB Reaktor GmbH**
**Dudenstrasse 44**
**D-6800 Mannheim 1 (DE)**

(72) Erfinder: **Scharpenberg, Rainer, Dipl.-Ing.**
**Im Krappenklingen**
**D-6948 Wald-Michelbach (DE)**
Erfinder: **Heckhausen, Herrman-Josef, Dipl.-Ing.**
**Huegelstrasse 35**
**D-6940 Weinheim (DE)**

(74) Vertreter: **Rupprecht, Klaus, Dipl.-Ing. et al**
**c/o BBC Brown Boveri Aktiengesellschaft ZPT**
**Postfach 100351 Kallstadter Strasse 1**
**D-6800 Mannheim 1 (DE)**

**Beschreibung**

Die Erfindung betrifft eine Einrichtung zur Inspektion von Kernreaktor-Brennstäben, die als Brennstabbündel in einem Brennelement zusammengefaßt sind, wobei in mehreren Ebenen mit Ultraschall-Prüköpfen bestückte Finger einer Prüfsonde in die Räume zwischen den Brennstäben einfahrbar sind.

Eine derartige Einrichtung ist aus der DE—OS 34 19 765 bekannt. Dort ist die Sonde parallel zur Längserstrekkung des Brennelementes bewegbar um eine Inspektion in mehreren Ebenen zu ermöglichen. Die vertikale Bewegung der Sonde über mehrere Meter (ein Brennelement ist ca. vier Meter lang) erfordert einen präzisen und damit aufwendigen Spindeltrieb. Das Brennelement und somit auch die Einrichtung sind aus Gründen des Strahlenschutzes in einer Wasservorlage angeordnet. Die vertikale Fahrbewegung der Sonde in die verschiedenen Prüfebenen kann daher nur langsam erfolgen. Neben dem nacheinander auf den verschiedenen Ebenen ablaufenden Prüfvorgang trägt insbesondere die erforderliche Vertikalbewegung der Sonde zu einem erheblichen Zeitaufwand bei. Da die Inspektion der Brennstäbe bei abgeschalteter Reaktoranlage erfolgt, geht die Inspektionszeit an der Verfügbarkeit des Kernkraftwerkes verloren.

Es stellt sich die Aufgabe, den Inspektionsaufwand zu verringern, aber trotzdem ein präzises Positionieren der Sonde in Richtung der zu durchfahrenden Räume sicherzustellen.

Gelöst wird diese Aufgabe erfindungsgemäß dadurch, daß für jede Ebene eine separate Prüfsonde vorgesehen ist, und daß vor dem Einfahren der Prüfsonden die Einfahrposition jeder Prüfsonde unabhängig von der Einfahrposition der anderen Prüfsonden korrigierbar ist. Dadurch ist sichergestellt, daß eine Schieflage des Brennelementes bzw. eine Verbiegung der Brennstäbe (Abweichung von der Normalen) problemlos, d.h. ohne die Gefahr des Anlaufens einer Prüfsonde an einen Brennstab beherrscht wird. Erst durch das separate Positionieren wird das gleichzeitige Prüfen in mehreren Ebenen möglich.

Eine bevorzugte Ausgestaltung sieht vor, daß ein Rahmengestell die den verschiedenen Ebenen zugeordneten Sonden aufnimmt, daß das Rahmengestell zusammen mit den Sonden in Einfahrrichtung der Sonden bewegbar ist und daß über einen gemeinsamen Antrieb die Sonden aller Ebenen quer zur Einfahrrichtung verfahrbar sind. Dieser einfach aufgebaute Rahmen, der nicht mehr Platz in Anspruch nimmt als die bekannte Einrichtung mit vertikal verfahrbaren Sonden, gestattet die gemeinsame Bewegung der Sonde sowohl in Einfahrrichtung als auch quer dazu.

Zur Integrierung von Bewegungsablauf und Abstützung des Rahmengestells ist vorgesehen, daß an einer Unterseite des Rahmengestells wenigstens zwei parallel zueinander erstreckte Spindelmuttern befestigt sind, daß in Konsolen einer Tragplatte gelagerte Spindeln in die Spindelmuttern eingreifen und sowohl zur Bewegung des Rahmengestells als auch zu dessen Abstützung dienen.

Gemäß einer vorteilhaften Ausbildung ist vorgesehen, daß das Rahmengestell in jeder Ebene eine in ihrem Mittelbereich als Spindel ausgebildete Welle trägt, daß die Welle in ihrem Mittelbereich eine als Spindelmutter wirkenden Sondenträger aufnimmt, daß der Mittelbereich von zwei Holmen begrenzt ist, die relativ zur Welle festgelegt sind und mindestens um das Maß eines Brennstabdurchmessers weiter in der gleichen Richtung wie die Finger der Sonde von der Welle auskragen, daß der Abstand zwischen den Holmen gleich der Sollbreite eines Brennelementes ist und daß die Welle relativ zu ihren Lagerstellen verschiebbar ist. Durch einfache mechanische Hilfsmittel gelingt hier die Nachführung der Sonden bei Brennelementen, die in ihrer senkrechten Erstreckung von der Normalen abweichen.

Damit die einmal eingenommene Position der Holme sich nicht selbstätig verstellt wird vorgeschlagen, daß die Welle ihre in gegenüberliegenden Seitenwänden des Rahmengestells angeordneten Lagerstellen durchsetzt, daß die aus den Seitenwänden herausragenden freien Enden mit einem Widerlager versehen sind und daß zwischen dem Widerlager und der jeweiligen Seitenwand eine Druckfeder angeordnet ist.

Eine weitere Ausbildung der Einrichtung sieht vor, daß jeder Welle ein Schneckenrad zugeordnet ist, das mit der Welle eine Nut-/Federverbindung eingeht und daß eine quer zu den Wellen erstreckte Schneckenwelle in alle Schneckenräder gleichzeitig eingreift. Nachdem die Position der in den einzelnen Ebenen angeordneten Sonden korrigierbar ist wird jetzt die gleichmäßige Bewegung aller Sonden bei ihrem Weg von einem Zwischenraum zum nächsten sichergestellt. Die Nut-/Federverbindung gestattet die Axialbewegung der Welle relativ zum Schneckenrad.

Vorzugsweise ist jedes Schneckenrad in einer dem Rahmengestelle zugeordneten Nabe in seiner axialen Bewegungsrichtung begrenzt. Die seitliche Festlegung des Schneckenrades verhindert, daß dasselbe die Axialbewegung der Welle mit ausführt.

Eine andere Ausgestaltung sieht vor, daß von einer Aufnahmeplatte für ein Brennelement zwei parallel zueinander und zum Brennelement erstreckte Streben auskragen, daß sich zwischen den Streben ein jeweils jeder Ebene zugeordneter Spindeltrieb quer zu den Streben erstreckt, daß an einer jedem Spindeltrieb zugeordneten Spindelmutter ein Sondenträger befestigt ist, auf dem ein Antriebselement für die Einfahrbewegung der Sonde in die Räume zwischen den Brennstäben angeordnet ist. Dabei lassen sich die Sonden der verschiedenen Ebenen unabhängig voneinander positionieren als auch unabhängig voneinander die Einfahrbewegung durchführen. Dabei wird die Positionierung der Sonden auf einfache Weise dadurch erzielt, daß eine zur Führung der Sondenfinger vorgesehene Leiste zwischen den Sondenfingern einen Ultraschall-Wandler trägt, daß der Wandler Schallwellen in Richtung der Einfahrrichtung aussendet und daß die zurücklaufenden Echos zur Positionsbestimmung der Sonde relativ zu einem Brennstab dienen. Dadurch erhält der als Sender und Empfänger ausgebildete Wandler ein maximales Echo, wenn sich die Sondenmitte mit der Mitte des beschallten Brennstabes trifft. Die Einfahrbewegung der jeweiligen Sonde kann dann unmittelbar erfolgen.

Eine andere Ausgestaltung sieht vor, daß eine weitere Strebenanordnung um 90° versetzt zur ersten vorgesehen ist, die auf gegenüber der ersten Strebenanordnung versetzten Ebenen weitere Sonden trägt. Damit ist die gleichzeitige Prüfung eines Brennelementes von zwei Seiten möglich.

Anhand von zwei Ausführungsbeispielen und der Zeichnungen Figur 1 bis 6 wird die Erfindung beschrieben.

Dabei zeigt:

Figur 1 Eine Vorderansicht einer Einrichtung zur Inspektion von Brennelementen,

Figur 2 einen Schnitt entlang der Linie II—II der Figur 1,

Figur 3 eine Einzelheit III der Figur 2,

Figur 4 eine andere Ausbildung der Einrichtung,

Figur 5 einen Schnitt entlang der Linie V—V der Figur 4 und

Figur 6a eine in einem größeren Maßstab dargestellte bis 6f Sonde mit Ultraschall-Aufzeichnung.

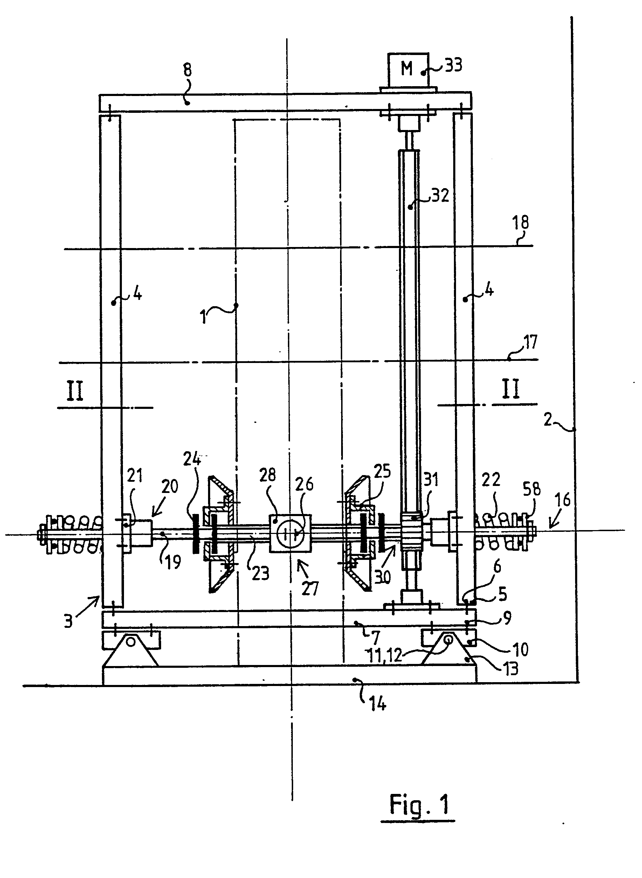

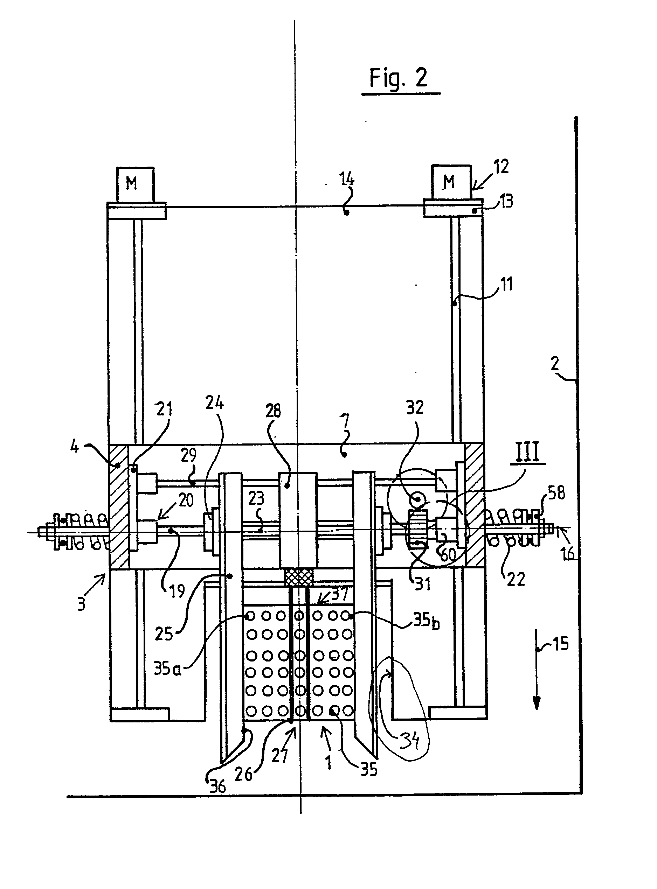

Eine in den Figuren 1 und 2 dargestellte Inspektionseinrichtung ist zusammen mit einem zu prüfenden Brennelement 1 in einem mit 2 angedeuteten wassergefüllten Becken angeordnet. Die Inspektionseinrichtung weist ein Rahmengestell 3 auf, das aus parallelerstreckten gegenüberliegend angeordneten Seitenwänden 4 besteht, an deren Stirnseiten 5 über Verbindungselemente 6 eine Grund 7 und eine Deckplatte 8 befestigt ist. An der Unterseite der Grundplatte 7 sind über Schrauben 9 zwei Spindelmuttern 10 angelenkt. In den Spindelmuttern 10 sind parallelerstreckte Spindeln 11 von zwei Spindeltrieben 12 geführt, die in Konsolen 13 gelagert sind. Die Konsolen 13 sind mit einer Tragplatte 14 verschweißt, die ihrerseits am Boden des Beckens 2 abgestützt ist. Die Spindeltriebe 12 dienen somit in vorteilhafterweise sowohl zum Bewegen des Rahmengestells 3 in Pfeirichtung 15 als auch zu dessen Abstützung.

In den Ebenen 16, 17 und 18 (Figur 1) durchsetzt je eine Welle 19 die gegenüberliegenden Seitenwände 4 dys Rahmengestells 3. Die gegenüberliegenden Lagerstellen 20 der jeweiligen Welle 19 werden durch Lagerkonsolen 21 gebildet, die an den Seitenwänden verschraubt sind. Mit ihren freien Enden durchsetzt die Welle 19 sowohl die jeweilige Lagerstelle 20 als auch die jeweilige Seitenwand 4. Das freie Wellenende trägt ein Widerlager (21) 58. Zwischen dem Widerlager und der nach außen gerichteten Fläche einer Seitenwand 4 ist eine Druckfeder 22 angeordnet, die eine Bewegung der Welle 19 in ihrer Achsrichtung innerhalb eines vorgegebenen Spielraumes erlaubt.

Ein als Gewindespindel ausgebildeter Mittelteil 23 der Welle 19 wird von einer auf der Welle 19 befestigten Scheibe 24 begrenzt. Jede Scheibe 24 trägt einen Holmen 25, der in gleiche Richtung von der Welle 19 auskragt, wie die Finger 26 einer Sonde 27. Eine in das Gewinde des Mittelteils 23 eingreifende Spindelmutter ist als Sondenträger 28 ausgebildet und gestattet somit eine Bewegung der Sonden in Achsrichtung der Welle 19 sobald diese Welle in Drehung versetzt wird. Auf der gleichen Ebene wie die Welle 19 ist eine Stange 29 parallel zur Welle 19 angeorndet und ebenfalls in der Lagerkonsole 21 gelagert (Figur 2). Die Stange 29 durchsetzt in einer Art Gleitlagerverbindung die dem Brennelement abgewandte Seite der Holme 25 und des Sondenträgers 28. Sie dient somit zur Arretierung von Holmen und Sondenträger sowie zu der Führung dieser Bauteile bei ihrer Bewegung in Achsrichtung der Welle 19.

Die Welle 19 mit den ihr zugeordneten Bauteilen ist aus Gründen der besseren Übersicht in der Figur 1 nur für die Ebene 16 ausführlich dargestellt. Sie ist für die Ebenen 17 und 18 ebenso ausgebildet und daher dort nur durch eine strichpunktierte Linie angedeutet.

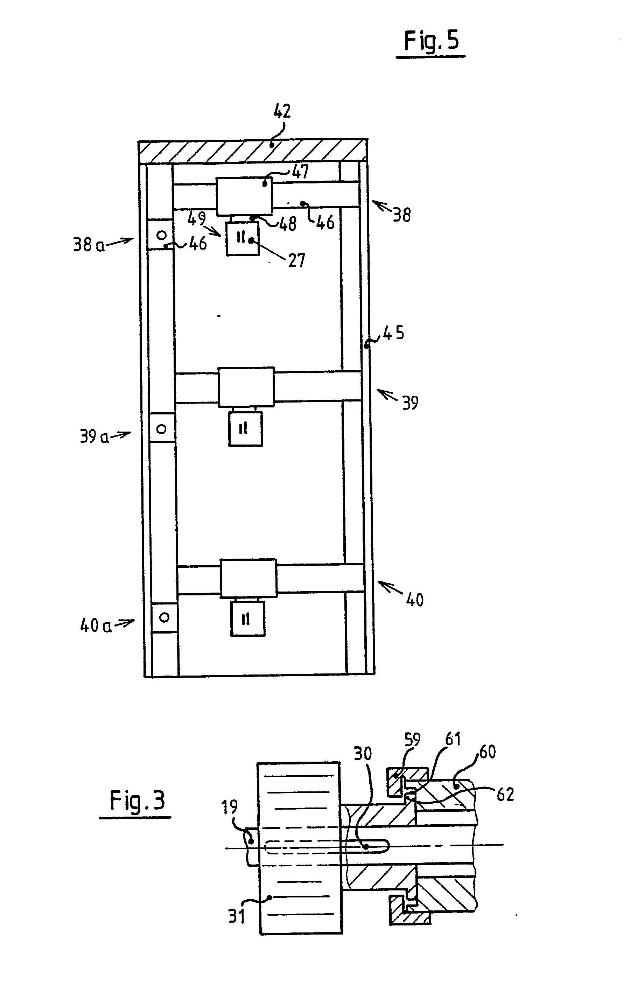

Jeder Welle 19 ist über eine Nut-/Federverbindung 30 ein Schneckenrad 31 zugeordnet. Eine Überwurfmutter 59 übergreift eine Nabe 60 der Lagerstelle 20 derart, daß ein Ringspalt 61 gebildet wird, der einen Bund 62 des Schneckenradkörpers mit einem vorgebbaren Spiel aufnimmt (Figur 3). Damit wird sichergestellt, daß das Schneckenrad in seiner axialen Bewegung begrenzt ist. An seiner Drehbewegung wird es dagegen durch die Nabe 60 nicht gehindert. Die Nut-/Federverbindung 30 ist mit einem solchen Spiel ausgestattet, daß bei ruhendem Schneckenrad 31 eine Axialbewegung der Welle 19 relativ zum Schneckenrad möglich ist. In jedes Schneckenrad 31 greift eine Schneckenwelle 32 ein, die sich zwischen der Grund- 7 und der Deckplatte 8 erstreckt und an dort befestigten Lagerstellen abgestützt ist. Über einen Antrieb 33 wird die Schneckenwelle 32 in Drehung versetzt und erlaubt die gleichzeitige Verstellung der in verschiedenen Ebenen 16, 17, 18 angeordneten Sonderträger in Achsrichtung der Welle 19.

Die Funktion der in Figur 1 bis 3 dargestellten Inspektionseinrichtungen wird nachfolgend erläutert.

Das zu prüfende Brennelement 1 ist im Becken 2 oder unmittelbar an der Tragplatte 14 in nicht dargestellter Weise im Bereich der Aussparung 34 der Tragplatte 14 festgelegt, so daß die Lage zwischen dem Rahmengestell 3 und dem Brennelement 1 vorzugeben ist. Zur Beschleunigung des Prüfungsverfahren sind bei dem Ausführungsbeispiel auf drei stationären Ebenen 16, 17 und 18 Sonden 27 angeordnet, deren mit Ultraschallprüfköpfen bestückte Finger 26 in die Räume zwischen den Brennstäben 35 des Brennelementes 1 einfahren um defekte Brennstäbe festzustellen. Angetrieben durch die Spindeltriebe 10 wird das Rahmengestell 3 in Einfahrrichtung der Sonden (Pfeilrichtung 15) soweit an das Brennelement herangefahren, bis die Endbereiche 36 der Holmen 25 die äußeren Brennstäbe 35a und 35b der der Welle 19 zugewandten ersten Brennstabreihe 37 kontakten. Da die Endbreiche 36 mindestens um das Maß eines Brennstabdurchmessers weiter von der Welle 19 auskragen als die freien Enden der Finger 26 ist jetzt die Sonde 27 jeder Ebene 16, 17, 18 entsprechend der auf diesem Niveau anzutreffenden Brennelement-Konfiguration positioniert. Durch die an den freien Enden der Wellen 19 angreifenden Druckfedern 22 kann die Welle 19 die Abweichung der Holmen von der Brennelement-Normalen ausgleichen. Die Welle 19 führt also die durch eine Brennstabverbiegung (in einem solchen Fall weichen die Brennstäbe in der Regel in der selben Richtung von der Normalen ab) stattfindende Verschiebung der Holmen durch die feste Verbindung zwischen Scheibe 24 und Welle 19 mit aus. Da die Innenflächen der Holmen den Bezugspunkt für die Sonden darstellen, können die Finger der Sonden 27 nach vorheriger Verstellung des Sondenträgers 28 durch das Schneckenrad 31 präzise in die Räume zwischen den Brennstäben einfahren. Die Korrektur mit den Holmen stellt sicher, daß Brennstabverbiegungen mit Abweichungen zwischen den einzelnen Ebenen in der Größenordnung von einigen Millimetern ausgeglichen werden und ein Anlaufen eines Fingers 26 an einen Brennstab vermieden wird.

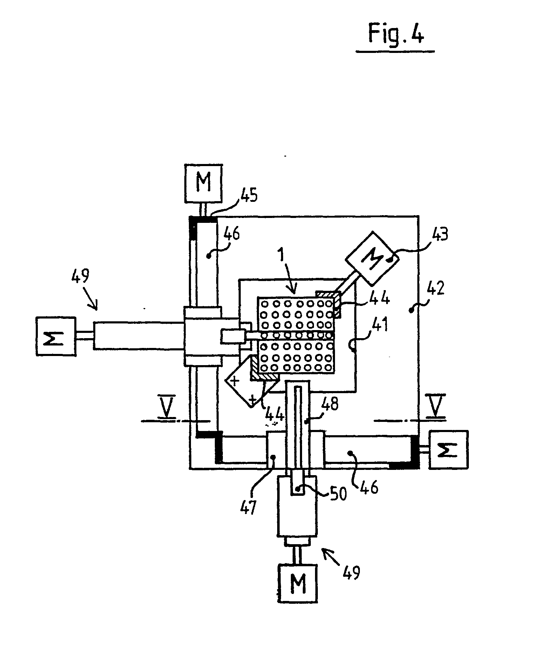

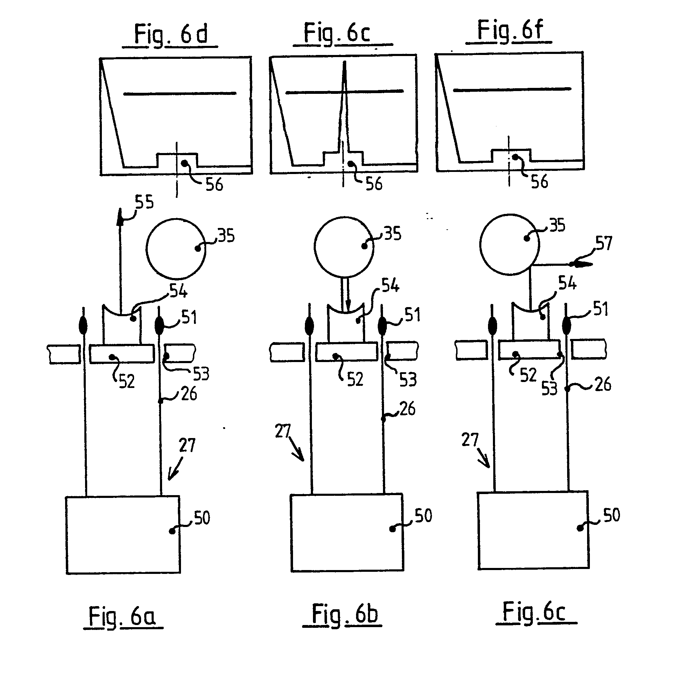

Eine andere Ausbildung der Einrichtung ist in den Figuren 4 und 5 dargestellt. Wie die Figur 5 zeigt, sind hier die Sonden 27 ebenfalls in verschiedenen Ebenen 38, 39, 40 angeordnet. Ein zu prüfendes Brennelement 1 ist in einer Aussparung 41 einer Basisplatte 42 abgestützt und über zwei mittels eines Antriebs 43 steuerbaren Klemmbacken 44 gehalten. Vor der Basisplatte 42 erstrecken sich in vertikaler Richtung drei Streben 45. In verschiedenen Ebenen erstrecken sich zwischen den Streben Spindeltriebe 46, so daß mehrere Sonden 27 um 90° versetzt zueinander in die Räume zwischen den Brennstäben 35 einfahren können. Hierzu ist es erforderlich, daß die Ebenen 38a, 39a, 40a der um 90° versetzten Sonden ein gegenüber den Ebenen unterschiedliches Höhenniveau aufweisen, um ein gleichzeitiges Einfahren von verschiedenen Brennelement-Seiten aus zu ermöglichen. Bei jedem zwischen den Streben angeordneten Spindeltrieb 46 ist an der Spindelmutter 47 ein Sondenträger 48 befestigt, der seinerseits ein Antriebselement 49 für die Einfahrbewegung der Sonden in die Räume zwischen den Brennstäben aufweist.

Das Justieren zum positionsgenauen Einfahren der Sonden wird in den Figuren 6a bis 6f demonstriert. Die Figuren 6a bis 6c zeigen einen Halter 50 für die Finger 26, an deren freien Enden die Ultraschallprüfköpfe 51 zu erkennen sind. Eine Leiste 52, die mit ihren Schlitzen 53 der Führung der Finger 26 dient, trägt in symmetrischer Anordnung zwischen den Fingern einen Ultraschall-Wandler 54. Er ist zum Senden von Schallwellen und zum Empfangen der zurückgeworfenen Echos ausgerüstet. Zum Positionieren der Sonden fährt jeder einer Ebene zugeordnete Spindeltrieb quer zur Einfahrrichtung der Sonden. Von den dabei ständig von den Ultraschallwandler 54 ausgesandten Schallwellen zeigen die Figuren 6a bis 6f drei Ergebnisse. Nach der Figur 6a läuft die Schallwelle (symbolisiert durch den Pfeil 55) am Brennstab vorbei. Die Ultraschall-Aufzeichnung nach Figur 6d liefert keine Reflektion und die eine Tor-Schaltung darstellende Ausklinkung 56 bleibt leer. Nach der Figur 6b wirkt das stärkste Echo, da sich die Sondenmitte mit der Mitte des Brennstabes 35 deckt. Die Torschaltung nach Figur 6e bestätigt die richtige Lage des Echos. In dieser Position kann die Sonde ohne Kollisionsgefahr in die Zwischenräume einfahren. Die Figur 6c zeigt die Ablenkung der Schallwelle, symbolisiert durch den Pfeil 57. Die dazugehörige Ultraschall-Auszeichnung nach der Figur 6f läßt daher kein Echo erkennen.

| | |
|---|---|
| 1 | Brennelement |
| 2 | Becken |
| 3 | Rahmengestell |
| 4 | Seitenwand |
| 5 | Stirnseite |
| 6 | Verbindungselement |
| 7 | Grundplatte |
| 8 | Deckplatte |
| 9 | Schrauben |
| 10,47 | Spindelmutter |
| 11 | Spindel |
| 12,46 | Spindeltrieb |
| 13 | Konsole |
| 14 | Tragplatte |
| 15 | Pfeilrichtung |
| 16,17,18,38,39,40, 38a,39a,40a | Ebene |
| 19 | Welle |
| 20 | Lagerstelle |
| 21 | Lagerkonsole |
| 22 | Druckfeder |
| 23 | Mittelteil |
| 24 | Scheibe |
| 25 | Holmen |
| 26 | Finger |
| 27 | Sonde |
| 28,48 | Sondenträger |
| 29 | Stange |
| 30 | Nut-/Federverbindung |
| 31 | Schneckenrad |
| 32 | Schneckenwelle |
| 33,43 | Antrieb |
| 34,41 | Aussparung |
| 35 | Brennstäbe |
| 36 | Endbereiche der Holmen |
| 37 | Brennstabreihe |
| 42 | Basisplatte |
| 44 | Klemmbacken |
| 45 | Streben |
| 49 | Antriebselement |
| 50 | Halter |
| 51 | Ultraschall-Prüfkopf |
| 52 | Leiste |
| 53 | Schlitz |

| 54 | Ultraschallwandler |
|----|----|
| 55,57 | Pfeil |
| 56 | Ausklinkung |
| 58 | Widerlager |
| 59 | Überwurfmutter |
| 60 | Nabe |
| 61 | Ringspalt |
| 62 | Bund |

**Patentansprüche**

1. Einrichtung zur Inspektion von Kernreaktor-Brennstäben, die als Brennstabbündel in einem Brennelement (1) zusammengefaßt sind, wobei in mehreren Ebenen (16, 17, 18) mit Ultraschall-Prüfköpfen (51) bestückte Finger (26) einer Prüfsonde (27) in die Räume zwischen den Brennstäben (35, 35a, 35b) einfahrbar sind, dadurch gekennzeichnet, daß für jede Ebene (16, 17, 18) eine separate Prüfsonde (27) vorgesehen ist, daß vor dem Einfahren der Prüfsonden (27) die Einfahrposition jeder Prüfsonde unabhängig von der Einfahrposition der anderen Prüfsonden korrigierbar ist.

2. Einrichtung nach Anspruch 1, dadurch gekennzeichnet, daß ein Rahmengestell (3) die den verschiedenen Ebenen (16, 17, 18) zugeordneten Sonden (27) aufnimmt, daß das Rahmengestell (3) zusammen mit den Sonden (27) in Einfahrrichtung der Sonden bewegbar ist und daß über einen gemeinsamen Antrieb die Sonden aller Ebenen quer zur Einfahrrichtung verfahrbar sind.

3. Einrichtung nach Anspruch 2, dadurch gekennzeichnet, daß an einer Unterseite des Rahmengestells (3) wenigstens zwei parallel zueinander erstreckte Spindelmuttern (10) befestigt sind, daß in Konsolen (13) einer Tragplatte (14) gelagerte Spindeln (11) in die Spindelmuttern (10) eingreifen und sowohl zur Bewegung des Rahmengestells (3) als auch zu dessen Abstützung dienen.

4. Einrichtung nach Anspruch 1, 2 oder 3, dadurch gekennzeichnet, daß das Rahmengestell (3) in jeder Ebene (16, 17, 18) eine in ihrem Mittelbereich (23) als Spindel ausgebildete Welle (19) trägt, daß die Welle (19) in ihrem Mittelbereich (23) eine als Spindelmutter wirkenden Sondenträger (28) aufnimmt, daß der Mittelbereich (23) von zwei Holmen (25) begrenzt ist, die relativ zur Welle (19) festgelegt sind, und mindestens um das Maß eines Brennstabdurchmessers weiter in der gleichen Richtung wie die Finger (26) der Sonde (27) und der Welle (19) auskragen, daß der Abstand zwischen den Holmen (25) gleich der Sollbreite eines Brennelementes (1) ist und daß die Welle (19) relativ zu ihren Lagerstellen (20) verschiebbar ist.

5. Einrichtung nach Anspruch 4, dadurch gekennzeichnet, daß die Welle (19) ihre in gegenüberliegenden Seitenwänden (4) des Rahmengestells (3) angeordneten Lagerstellen (29) durchsetzt, daß die aus den Seitenwänden herausragenden freien Enden mit einem Widerlager (58) versehen sind und daß zwischen dem Widerlager und der jeweiligen Seitenwand eine Druckfeder (22) angeordnet ist.

6. Einrichtung nach Anspruch 2, 4 oder 5, dadurch gekennzeichnet, daß jeder Welle (19) ein Schneckenrad (31) zugeordnet ist, das mit der Welle (19) eine Nut-/Federverbindung (30) eingeht und daß eine quer zu den Wellen (19) erstreckte Schneckenwelle (32) in alle Schneckenräder gleichzeitig eingreift.

7. Einrichtung nach Anspruch 6, dadurch gekennzeichnet, daß jedes Schneckenrad (31) in einer dem Rahmengestell (3) zugeordneten Nabe in seiner axialen Bewegungsrichtung begrenzt ist.

8. Einrichtung nach Anspruch 3, dadurch gekennzeichnet, daß von einer Basisplatte (42) zur Aufnahme eines Brennelementes 1 zwei parallel zueinander und zum Brennelement 1 erstreckte Streben (45) auskragen, daß sich ein jeweils jeder Ebene (38, 39, 40) zugeordneter Spindeltrieb (46) quer zu den Streben (45) erstreckt, daß an einer jedem Spindeltrieb zugeordneten Spindelmutter ein Sondenträger (48) befestigt ist, auf dem ein Antriebselement für die Einfahrbewegung der Sonde (27) in die Räume zwischen den Brennstäben angeordnet ist.

9. Einrichtung nach Anspruch 1 oder 8, dadurch gekennzeichnet, daß eine zur Führung der Sondenfinger (26) vorgesehene Leiste (52) zwischen den Sondenfingern einen Ultraschall-Wandler (54) trägt, daß der Ultraschall-Wandler Schallwellen in der Einfahrrichtung aussendet und daß die zurücklaufenden Echos zur Positionsbestimmung der Sonde (27) relativ zu einem Brennstab dienen.

10. Einrichtung nach Anspruch 8 oder 9, dadurch gekennzeichnet, daß eine weitere Strebenanordnung um 90° versetzt zur ersten vorgesehen ist, die auf gegenüber der ersten Strebenanordnung verschiedenen Ebenen (38a, 39a, 40a) weitere Sonden (27) trägt.

**Revendications**

1. Dispositif pour l'inspection de barres de combustible de réacteur nucléaire qui sont rassemblées en forme de faisceau à l'intérieur d'un assemblage combustible (1), des doigts (26) d'une sonde de contrôle (27) garnis de capteurs (51) pour ultrasons pouvant être insérés, sur plusieurs plans (16, 17, 18), dans les espaces se trouvant enter les barres combustibles (35, 35a, 35b), caractérisé par le fait qu'une sonde de contrôle (27) séparée est prévue pour chacun des plans (16, 17, 18), qu'avant l'introduction des sondes (27), la position d'introduction de chacune d'elle peut être corrigée indépendamment de la position d'introduction des autres sondes.

2. Dispositif selon la revendication 1, caractérisé par le fait qu'un châssis (3) qui reçoit les sondes (27) disposées aux différents plans (16, 17, 18), que ledit châssis (3) est mobile en même temps que les sondes (27) dans la direction d'introduction desdites sondes et que les sondes de tous les plans peuvent être déplacées transversalement à la direction d'introduction au moyen d'un entraînement commun.

3. Dispositif selon la revendication 2, caractérisé par le fait que sur un côté inférieur du châssis (3) sont fixés au moins deux écrous (10) s'étendant parallèlement l'un par rapport à l'autre, que des broches (11) montées dans des consoles (13) d'une plaque support (14) pénètrent dans les écrous (10) et servent d'une part à déplacer le châssis (3) et d'autre part à le supporter.

4. Dispositif selon les revendications 1, 2 ou 3, caractérisé par le fait que le châssis (3) supporte dans chacun des plans (16, 17, 18) un arbre (19) ayant dans sa région centrale (23) la forme d'une broche, que ledit arbre (19) reçoit en son centre (23) un porte-sonde (28) faisant office d'écrou, que la région centrale (23) est délimitée par deux longerons (25) dont la position est définie par rapport à l'arbre (19) et qui font saillie dudit arbre (19) sur une distance au moins égale au diamètre d'une barre de combustible dans la même direction que les doigts (26) de la sonde (27), que la distance entre les longerons (25) est égale à la largeur nominale d'un assemblage combustible (1) et que l'arbre (19) est mobile par rapport à ses points d'appui (20).

5. Dispositif selon la revendication 4, caractérisé par le fait que l'arbre (19) dépasse ses points d'appui (20) disposés dans des parois latérales opposées (4) du châssis (3), que les extrémités libres émergeant desdites parois latérales sont munies d'un contre-appui (58) et qu'entre ledit contre-appui et la paroi latérale correspondante est disposé un ressort de compression (22).

6. Dispositif selon la revendication 2, 4 ou 5, caractérisé par le fait que chaque arbre (19) est muni d'une roue (31) à denture hélicoïdale constituant avec l'arbre (19) une liaison (30) à rainure et languette, et qu'un arbre à filetage hélicoïdal (32) s'étendant transversalement aux arbres (19) engrène simultanément avec toutes les roues à denture hélicoïdale.

7. Dispositif selon la revendication (6) caractérisé par le fait que chaque roue à denture hélicoïdale (31) est limitée dans son mouvement axial à l'intérieur d'un moyeu associé au châssis (3).

8. Dispositif selon la revendication 1, caractérisé par le fait que deux bras (45) s'étendant parallèlement l'un par rapport à l'autre et à l'assemblage combustible (1) débordent d'une plaque de base (42) afin de recevoir ledit assemblage combustible (1), qu'un entraînement à broche (46) associé respectivement à chacun des plans (38, 39, 40) s'étend transversalement aux bras (45), que sur chaque écrou associé à chaque entraînement à broche est fixé un porte-sonde (48) sur lequel est disposé un élément d'entraînement pour le mouvement d'introduction de la sonde (27) dans les espaces se trouvant entre les barres combustibles.

9. Dispositif selon les revendications 1 ou 8, caractérisé par le fait qu'une tringle (52) prévue pour le guidage des doigts (26) supporte entre lesdits diogts un convertisseur à ultrasons (54), que ledit convertisseur à ultrasons émet des ondes sonores dans la direction de l'introduction et que les échos renvoyés servent à définir la position de la sonde (27) par rapport à une barre de combustible.

10. Dispositif selon la revendication 8 ou 9, caractérisé par la présence d'un autre ensemble de bras décalés de 90° par rapport aux premiers, cet ensemble de bras supportant d'autres sondes (27) sur des plans (38a, 39a, 40a) différents de ceux du premier ensemble de bras.

**Claims**

1. Apparatus for the inspection of nuclear reactor fuel rods, which are combined as fuel rod clusters in a fuel assembly (1), fingers (26) of a test probe (27), which are fitted with ultrasonic test heads (51) on several levels (16, 17, 18), being insertable in the spaces between the fuel rods (35, 35a, 35b), characterized in that a separate test probe (27) is provided for each level (16, 17, 18), in that, before the insertion of the test probes (27), the insertion position of sach test probe can be corrected independently of the insertion position of the other test probes.

2. Apparatus according to Claim 1, characterized in that a rack (3) holds the probes (27) assigned in the various levels (16, 17, 18), in that the rack (3) can be moved together with the probes (27) in insertion direction of the probes, and in that the probes of all levels can be moved transversely to the insertion direction by means of a jiont drive.

3. Apparatus according to Claim 2, characterized in that at least two spindle nuts (10) extending parallel to each other are fixed on an underside of the rack (3), that spindles (11) mounted in brackets (13) of a support plate (14) engage in the spindle nuts (10) and serve for both the movement of the rack (3) and its support.

4. Apparatus according to Claim 1, 2 or 3, characterized in that the rack (3) bears on each level (16, 17, 18) a shaft (19) designed in its central region (23) as a spindle, in that the shaft (19) receives in its central region (23) a probe carrier (28) acting as spindle nut, in that the central region (23) is bounded by two bars (25) which are fixed relative to the shaft (19) and jut out further from the shaft in the same direction as the fingers (26) of the probe (27) at least by the same amount as a fuel rod diameter, in that the distance between the bars (25) is equal to the set width of a fuel assembly (1) and in that the shaft (19) is displaceable relative to its bearing points (20).

5. Apparatus according to Claim 4, characterized in that the shaft (19) passes through its bearing points (20) arranged in opposite side walls (4) of the rack (3), in that the free ends protruding from the side walls are provided with an abutment (58) and in that a compression spring (22) is arranged between the abutment and the respective side wall.

6. Apparatus according to Claim 2, 4 or 5, characterized in that each shaft (19) is assigned a worm wheel (31) which together with the shaft (19) makes a groove and tongue connection (30) and in that a worm shaft (32) extending transversely to the shafts (19) engages simultaneously in all worm wheels.

7. Apparatus according to Claim 6, characterized in that each worm wheel (31) is limited in its axial direction of movement in a hub assigned to the rack (3).

8. Apparatus according to Claim 1, characterized in that two struts (45) extending parallel to each other and to the fuel assembly (1) jut out from a base plate (42) for holding a fuel assembly (1), in that there extends transversely to the struts (45) a spindle drive mechanism (46) in each case assigned to each level (38, 39, 40), in that on a spindle nut assigned to each spindle drive mechanism is fixed a probe carrier (48), on which a drive element is arranged for the insertion movement of the probe (27) into the spaces between the fuel rods.

9. Apparatus according to Claim 1 or 8, characterized in that a strip (52) provided for guidance of the probe fingers (26) carries between the probe fingers an ultrasonic transducer (54), in that the ultrasonic transducer emits sound waves in the insertion direction and in that the returning echoes serve for the positional determination of the probe (27) relative to a fuel rod.

10. Apparatus according to Claim 8 or 9, characterized in that a further strut arrangement is provided, which is offset by 90° with respect to the first and carries further probes (27) on levels (38a, 39a, 40a) offset with respect to the first strut arrangement.

Fig. 1

Fig. 2

Fig. 5

Fig. 3

Fig.4

## Fig. 6d

## Fig. 6c

## Fig. 6f

## Fig. 6a

## Fig. 6b

## Fig. 6c